# EUROPÄISCHE PATENTSCHRIFT

(11) **EP 2 348 331 B1**
(45) Veröffentlichungstag und Bekanntmachung des Hinweises auf die Patenterteilung: **07.09.2011**
(21) Anmeldenummer: 10151342.2
(22) Anmeldetag: 21.01.2010
(51) Int. Cl.: G01S 17/48, G01S 17/02

(54) **Optoelektronischer Sensor zur Detektion von Objektkanten**
Optoelectronic sensor for detecting object edges
Capteur optoélectronique destiné à la détection de bords d'objets

(43) Veröffentlichungstag der Anmeldung: 27.07.2011
(73) Patentinhaber: SICK AG, 79183 Waldkirch (DE)
(72) Erfinder: Hörsch, Ingolf, 79102, Freiburg (DE); Bergbach, Roland, 79341, Kenzingen (DE)
(74) Vertreter: Hehl, Ulrich

(56) Entgegenhaltungen:
- US-A1- 2007 272 841

## Beschreibung

Die Erfindung betrifft einen optoelektronischen Sensor zur Detektion von Objektkanten mit mindestens zwei Lichtsendern sowie ein Verfahren zur Detektion von relativ zu einem Sensor bewegten Objekten anhand von Objektkanten mit mindestens zwei kollimierten Sendestrahlen nach dem Oberbegriff von Anspruch 1 beziehungsweise 12.

Eine häufige Anwendung optoelektronischer Sensoren und speziell optischer Lichttaster, denen im Gegensatz zu einer Lichtschranke kein gegenüberliegendes kooperatives Ziel oder Empfänger fest zugeordnet ist, besteht in der Erkennung von Objekten speziell im Moment des Einfahrens in den Detektionsstrahl. Dabei muss die Objektkante von Objektflächen oder Hintergrund unterschieden werden.

Dies zu erkennen ist besonders im Falle schnell bewegter, möglicherweise bunter, glänzender oder spiegelnder und dicht aufeinanderfolgender, nur durch eine schmale Fuge getrennter Objekte sehr anspruchsvoll. Ein Beispiel sind auf einem Band geförderte Verpackungen, etwa Getränkekartons, bei denen ein am Förderband montierter Sensor jeweils ein Schaltsignal bei Vorbeifahren jeder Verpackung auslösen soll. Die Verpackungen sind in der Regel nicht vereinzelt, sondern werden quasi im Stau gefördert, so dass nur sehr schmale Spalte die Verpackungen voneinander trennen. Dabei erfordern Fördergeschwindigkeiten von einigen Metern pro Sekunde und teilweise recht kleine Dimensionen der Verpackungen Schaltfrequenzen von bis zu 100 Hz und darüber hinaus.

Ein herkömmlicher Lösungsansatz liegt darin, die Vereinzelung kurz vor der Erfassung mit dem Sensor zu erzwingen, indem ein Bremsbereich vorgesehen wird, den die Verpackungen vereinzelt verlassen, ehe sie sich wieder aufstauen können. Derartige mechanische Bremsbereiche benötigen Raum und sind auch schon an sich im Vergleich zu einem optischen Sensor sehr kostenintensiv. Außerdem verringert zwar im eingeschwungenen Zustand nicht der Bremsbereich selbst, sehr wohl aber die erzwungene Vereinzelung den Durchsatz.

Aus dem Stand der Technik sind Triangulationstaster bekannt, die einen Lichtstrahl auf das zu detektierende Objekt aussenden und die eine Empfängereinheit mit einem Nahbereich und einem Fernbereich aufweisen. Aus der Schwerpunktslage des empfangenen Lichts auf der Empfängereinheit lässt sich dann mittels Triangulation der Objektabstand ermitteln. Dieses Prinzip erkennt eine das Objekt trennende Kante wegen der punktuellen Abtastung gegenüber verrundeten Kanten oder Erhebungen auf einer Objektfläche nicht robust.

Weiterhin bekannt sind kamerabasierte Sensoren, die mit Bildauswertung oder Kontrasterkennung Objekte in der aufgenommenen Szenerie erkennen. Solche Sensoren sind vergleichsweise kostenintensiv und nur eingeschränkt störlichtfest.

Die DE 10 2006 057 878 B4 beschreibt ein Verfahren zur Erfassung von Objekten mittels einer optoelektronischen Vorrichtung, die mit einem Sender durch eine geteilte Empfangsoptik zwei Empfangslichtflecken erzeugt. In einer anderen Ausführungsform werden zwei Sender eingesetzt. Die Vorrichtung dient der Erkennung von glänzenden Objekten und verwendet stark aufgestreutes Sendelicht, damit ein Teil unter dem unbekannten Reflexionswinkel der glänzenden Objektoberfläche zum Empfänger zurückkehrt. In einer weiteren Ausführungsform wird dieser Glanzsensor um einen herkömmlichen Triangulationstaster ergänzt, so dass praktisch ein Doppelsensor entsteht. Beide Sensorteile werden in kurzen Zyklen alternierend betrieben, so dass bei unbekanntem Remissionsverhalten der zu erkennenden Objekte zumindest entweder der Glanzsensor oder der Triangulationstaster schaltet. Die Erkennungsleistung bei Objekten mit schmaler oder schlecht von Objektmusterstrukturen unterscheidbarer Trennungsfuge wird so nicht verbessert.

Die WO 2009/115202 A2 offenbart einen optischen Sensor zum Nachweisen eines Objekts in einem Überwachungsbereich, bei dem zwei Lichtsender zeitversetzt angesteuert werden. Damit entsteht effektiv ein Zusammenschluss von zwei herkömmlichen Lichttastern, die alternierend arbeiten. Die Objekterkennungssignale dieser einzelnen Lichttaster werden logisch verknüpft, beispielsweise gibt der Sensor ein Schaltsignal dann aus, wenn mit mindestens einem Lichtsender ein Objekt erkannt wurde. Damit kann erreicht werden, dass objektinterne Lücken, wie sie in Leiterplatten häufig auftreten, nicht mit einer äußeren Objektkante verwechselt werden. Das einzelne Detektionsergebnis, welches dann logisch verknüpft wird, ist aber wegen der einfachen punktuellen Abtastung nicht robust.

Aus der US 2007/0272841 A1 ist ein Barcodescanner bekannt, welcher in einigen Ausführungsformen mehrere Lichtsender aufweist, um ein dichteres Scanmuster zu erzeugen und so mittels Interlacing eine höhere Auflösung zu erzielen.

Es ist daher Aufgabe der Erfindung, einen einfachen optoelektronischen Sensor mit robuster Kantendetektion anzugeben.

Diese Aufgabe wird durch einen optoelektronischen Sensor mit mindestens zwei Lichtsendern gemäß Anspruch 1 und ein Verfahren zur Detektion von relativ zu einem Sensor bewegten Objekten mit mindestens zwei kollimierten Sendestrahlen gemäß Anspruch 12 gelöst. Dabei geht die Erfindung von dem Grundgedanken aus, das Objekt in mehr als einem Punkt abzutasten, um der Kantendetektion mehr Information zugrunde zu legen. Die derart aufgenommenen zusätzlichen Messdaten werden miteinander zu dem Objektfeststellungssignal verrechnet.

Die Lösung hat den Vorteil, dass auch Kanten sehr dicht aneinanderliegender Objekte zuverlässig erkannt werden. Fehlschaltungen beispielsweise bei schrägstehendem Objekt oder bei Streifenaufdrucken auf dem Objekt werden vermieden. Scharfkantige Objekte werden ebenso detektiert wie solche mit verrundeten Kanten. Durch ein Pulslichtverfahren kann, anders als bei einer Kamera, störendes Fremdlicht ausgeblendet werden. Ein Einlernen ist nicht erforderlich oder kann zumindest durch ein einfaches Auslösen mit einem einzigen Teach-Knopf erfolgen.

Erfindungsgemäß wird das analoge Signal, nämlich die Intensität oder der per Triangulation bestimmte Abstand, von zumindest zwei abgetasteten Orten miteinander verrechnet. Beispielsweise wird dazu der zeitliche Verlauf der Differenz auf einen Nulldurchgang untersucht. Die Betrachtung der Differenz schafft jeweils einen realistischen Bezugspunkt.

Dabei werden zwei Größen alternativ oder kombiniert ausgewertet. Die Empfangsintensität ist ein Maß für das Remissionsverhalten des Objekts am Ort der Lichtflecken, also Eigenschaften wie Farbe, Kontrast oder Glanzverhalten. Damit wird der Energieabfall in einer Lücke zwischen zwei Objekten registriert. Andererseits lässt sich eine Lücke nur schwer von einem dunklen Strich auf einer Objektfläche unterscheiden. Die mittels Triangulation gewonnene Abstands- oder Tiefeninformation dagegen misst die Geometrie einer Lücke, wo der Sendestrahl tiefer eindringt als auf der Objektfläche selbst. Damit werden möglicherweise noch Unebenheiten auf einer Objektfläche, beispielsweise ein aufgeklebter Falz, mit einer Objektkante verwechselt. Durch Kombination beider Erkennungsprinzipien, von denen jeweils das eine Prinzip robust gegenüber Problemfällen des anderen Prinzips ist, lassen sich Schaltfehler besonders effektiv vermeiden.

Der Sensor ist bevorzugt an einem Überwachungsbereich angeordnet, in dem sich Objekte und Sensor in einer Relativbewegung zueinander befinden, insbesondere an einem Förderband oder einer Förderstrecke. Die verbesserte Kantendetektion kommt gerade bei dicht aufeinanderfolgendem Fördergut mit sehr schmalen Trennfugen zum Tragen.

Die Lichtsender weisen bevorzugt jeweils den gleichen Basisabstand zu dem Lichtempfänger auf. Damit ist die Triangulationsbasis gleich und die Auswertung ist besonders einfach. Dabei sind die Lichtsender vorzugsweise gerade, somit ohne Verkippungswinkel gegenüber dem Lichtempfänger ausgerichtet.

Die Lichtsender weisen bevorzugt mindestens eine gemeinsame Linse insbesondere in telezentrischer Anordnung auf. Dann wird für eine besonders kostengünstige Bauweise nur eine Sendelinse benötigt, und die Abstände der Lichtflecken zueinander sind unabhängig vom Abstand des Objekts zu dem Sensor.

Die Lichtsender sind bevorzugt dafür ausgebildet, bei gleichem Objektabstand unterschiedliche Lichtfleckgrößen zu erzeugen. Der größere Lichtfleck mittelt bei dieser Ausführungsform in einem größeren Bereich und bildet so eine gute Referenz für den kleineren Lichtfleck.

Der Abstand der von verschiedenen Lichtsendern erzeugten Lichtflecken zueinander ist bevorzugt einstellbar. Diese Einstellung lässt sich beispielsweise durch Verkippen oder Verschieben der Lichtsender realisieren und wird ausgenutzt, um den Abstand der Lichtflecken zueinander optimal an den Objektabstand oder die Breite der zu detektierenden Kante anzupassen. Der Abstand kann auch vor dem eigentlichen Betrieb eingelernt werden, um die Erkennungsleistung weiter zu verbessern.

In einer bevorzugten Weiterbildung sind eine Vielzahl von Lichtsendern in einer Matrixanordnung oder in einer Linienanordnung vorgesehen. Vorteilhafterweise ist die Linie oder Matrix in einer Richtung längs oder quer zu der erwarteten Kantenlage ausgerichtet. Dabei werden die Lichtflecken jeweils zu Paaren zusammengefasst, beispielsweise zu jeweils benachbarten Paaren, und jedes dieser Paare wird anhand der Differenz der Empfangsintensität, der Differenz des Abstandes oder einer Kombination aus beidem ausgewertet.

Die Lichtsender sind bevorzugt längs einer zu erwartenden Kantenausrichtung angeordnet, wobei die Auswertungseinheit dafür ausgebildet ist, eine Kante nur dann zu erkennen, wenn anhand aller oder zumindest mehrerer Lichtflecken längs der Kante innerhalb einer zeitlichen Toleranz simultan eine Kante erkannt wird. Mehrere Paare von Lichtflecken werden hier sozusagen parallel ausgewertet, um durch Redundanz ein robusteres Messergebnis zu erhalten.

Alternativ sind die Lichtsender quer zu einer zu erwartenden Kantenausrichtung angeordnet, wobei jeweils ein Paar Lichtsender in einem erwarteten Zeitverlauf einer Relativbewegung zwischen Objekten und Sensor aktivierbar ist. Dies entspricht einer seriellen Mehrfachauswertung für robustere Messergebnisse. Dabei kann durch die selektive Aktivierung jeweils eines Paares Lichtsender bei gleichem thermischem Budget die Sendeleistung gegenüber einer Aktivierung der gesamten Linienanordnung der Sender erhöht und somit die Erkennungsleistung nochmals verbessert werden.

Die Auswertungseinheit ist bevorzugt dafür ausgebildet, eine Geschwindigkeit einer Relativbewegung zwischen Objekt und Sensor zu erkennen und insbesondere mit einer Referenzgeschwindigkeit zu vergleichen. Der Begriff Geschwindigkeit ist hier sehr allgemein als Vektor verwendet und umfasst damit sowohl Richtung als auch Geschwindigkeit der Bewegung im engeren skalaren Sinn. Die Geschwindigkeitsinformation kann in einer übergeordneten Steuerung zur Kontrolle und zur Durchsatzoptimierung verwendet werden.

Die Auswertungseinheit ist bevorzugt dafür ausgebildet, das Objektfeststellungssignal mit einem Versatz oder einem Zeitstempel auszugeben. Eine übergeordnete Steuerung, die das Schaltsignal empfängt, möchte den tatsächlichen Zeitpunkt erfahren, zu dem die Objektkante den Sensor passiert. Da in die Kantendetektion aber auch die Information einfließen muss, zu dem der spätere Lichtfleck die Kante trifft, ergibt sich ein zeitlicher Versatz, bis das Detekionsergebnis vorliegt. Dies kann eine übergeordnete Steuerung anhand einer konstanten oder ermittelten Geschwindigkeit herausrechnen und um den zeitlichen Versatz bereinigen. Alternativ versieht die Auswertungseinheit selbst jedes Schaltereignis mit einem um den zeitlichen Versatz korrigierten Zeitstempel.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Seitenansicht einer Ausführungsform des erfindungsgemäßen Sensors;
- Fig. 2: eine schematische dreidimensionale Seitenansicht eines Förderbandes, an dem der Sensor gemäß Fig. 1 in einer bevorzugten Anwendung montiert ist;
- Fig. 3a: eine Darstellung der zeitlichen Verläufe der Empfangsintensität in von zwei Lichtsendern erzeugten Lichtflecken sowie deren Differenz;
- Fig. 3b: eine Darstellung der zeitlichen Verläufe der per Triangulation aus von zwei Lichtsendern erzeugten Lichtflecken gewonnenen Objektabstände sowie deren Differenz;
- Fig. 4: eine schematische Draufsicht auf eine Ausführungsform des erfindungs- gemäßen Sensors mit gemeinsamer, telezentrischer Sendeoptik der Licht- sender;
- Fig. 5a: eine schematische Frontalansicht eines Objekts mit von zwei Lichtsendern erzeugten Lichtflecken unterschiedlicher Größe;
- Fig. 5b: eine Darstellung der zeitlichen Verläufe der Empfangsintensität sowie der Abstände in den beiden Lichtflecken gemäß Fig. 5a sowie deren Differenz;
- Fig. 6a: eine schematische dreidimensionale Ansicht von sechs zu einer Matrix angeordneten Lichtflecken einer entsprechenden Lichtsendermatrix einer weiteren Ausführungsform eines erfindungsgemäßen Sensors;
- Fig. 6b: eine beispielhafte Blockdarstellung zu einer Matrix angeordneter Lichtsen- der für die Lichtfleckanordnung gemäß Fig. 6a;
- Fig. 6c: eine Darstellung der zeitlichen Verläufe der Differenzen der Empfangsin- tensitäten sowie der Abstände zu jeweils einem Paar Lichtflecken gemäß Fig. 6a;
- Fig. 7a: eine schematische dreidimensionale Ansicht von vier zu einer querliegen- den Reihe angeordneten Lichtflecken einer weiteren Ausführungsform des erfindungsgemäßen Sensors; und
- Fig. 7b: eine Darstellung der zeitlichen Verläufe der Differenzen der Empfangsin- tensitäten sowie der Abstände zu jeweils einem Paar Lichtflecken gemäß Fig. 7a.

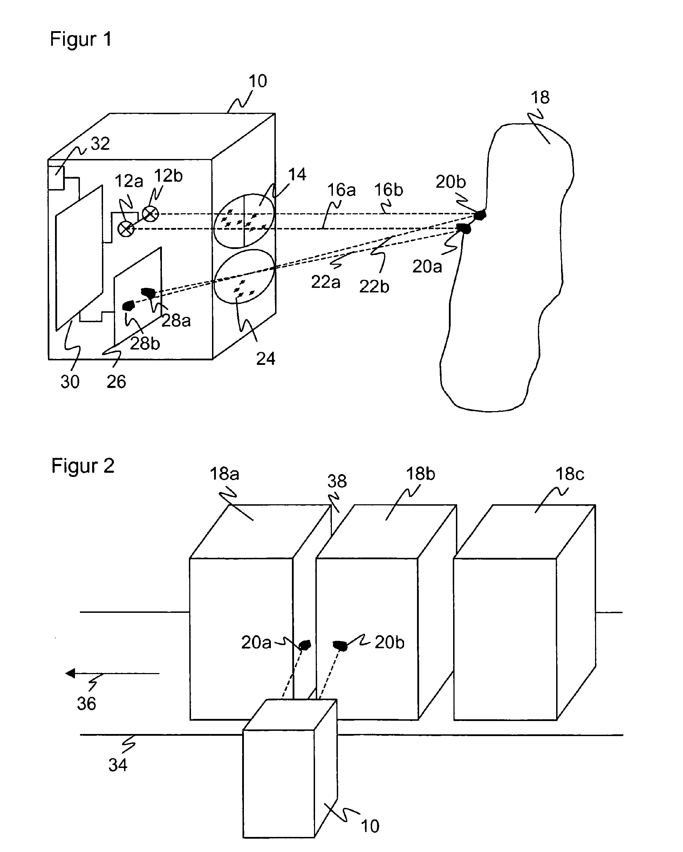

Figur 1 zeigt in einer schematischen dreidimensionalen Seitenansicht eine Ausführungsform eines erfindungsgemäßen optoelektronischen Sensors 10, der als Triangulations-Lichttaster ausgebildet ist. Zwei Lichtquellen 12a-b bilden mit einer Sendelinse 14 mit zweigeteilter Sendelinsenappertur zwei Lichtsender, deren Sendelichtstrahlen 16a-b auf ein Objekt 18 fallen und dort zwei Lichtflecken 20a-b erzeugen. In einer alternativen Ausgestaltung ist die Sendelinse 14 nicht geteilt, somit einteilig.

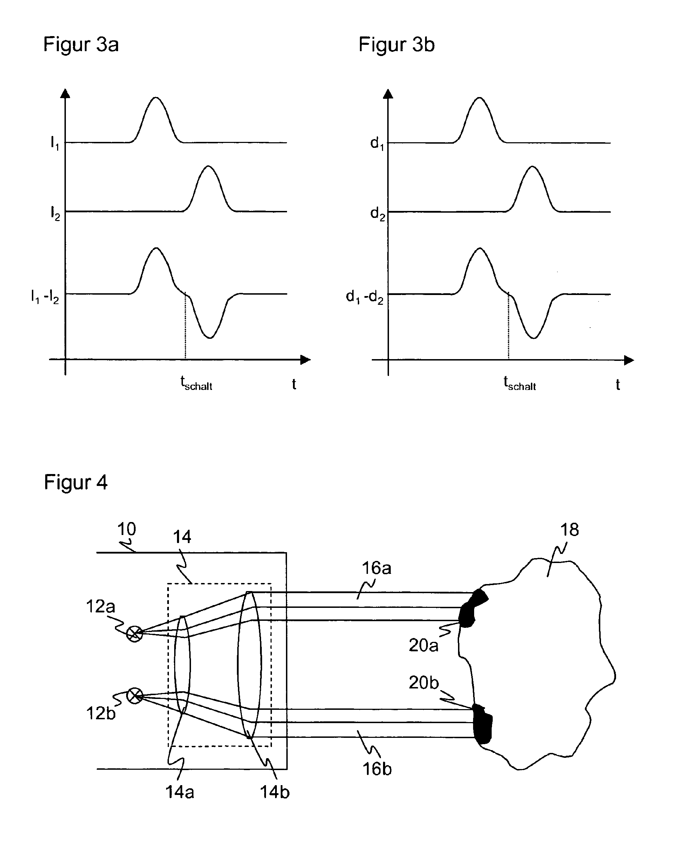

Das in den Lichtflecken 20a-b remittierte oder reflektierte Licht kehrt als Empfangslichtstrahlen 22a-b durch eine Empfangsoptik 24 zurück und wird in einem ortsauflösenden Lichtempfänger 26 detektiert. Dabei zeichnet der Lichtempfänger 26 sowohl die Lage als auch die Intensität in den aufgenommenen Abbildern 28a-b der Lichtflecken 20a-b auf. Eine Auswertungseinheit 30 ist mit den Lichtquellen 12a-b und dem Lichtempfänger 26 verbunden. Die Auswertungseinheit 30 wertet einerseits die Empfangsintensitäten der Lichtflecken 20a-b und andererseits mittels Triangulation den Objektabstand am Ort der Lichtflecken 20a-b aus, wie weiter unten im Zusammenhang mit Figur 3 noch näher erläutert. Erkennt die Auswertungseinheit 30 eine Objektkante und damit ein neues Objekt, so gibt sie über einen Ausgang 32 ein Objektfeststellungssignal aus.

Die Lichtquellen 12a-b sind bevorzugt Halbleiterlichtquellen, also Laser oder LEDs. Mit Hilfe der Sendeoptik 14 werden möglichst kleine Lichtflecken 20a-b erzeugt, um hohe lokale Auflösung und ein gutes Signal-Rausch-Verhältnis sicherzustellen. Als ortsauflösender Empfänger 26 dient ein Bildsensor, wie ein CCD- oder ein CMOS-Chip, oder auch eine Anordnung mehrerer Fotodioden wie in einem Si-PIN-Dioden-Array. Der Lichtempfänger 26 kann integriert mit der Auswertungseinheit 30 ausgebildet sein, etwa als ASIC. Vorstellbar ist ebenso ein nachgeordneter Logikbaustein, beispielsweise ein Mikroprozessor, ein FPGA (Field Programmable Gate Array) oder ein DSP (Digital Signal Processor), als Auswertungseinheit 30, der die Rohdaten oder vorverarbeitete Daten des Lichtempfängers 26 erhält und zu dem Schaltsignal verrechnet. Zur beschleunigten Auswertung kann vorgesehen sein, nur Teilbereiche (ROI, region of interest) des Lichtempfängers auszuwerten.

Figur 2 zeigt den Sensor 10 in einer Anordnung an einem Förderband 34, welches Objekte 18a-c in der durch den Pfeil 36 angedeuteten Richtung fördert. Hier wie im Folgenden bezeichnen gleiche Bezugszeichen die gleichen Merkmale. Die beiden Lichtflecken 20a-b tasten eine als Kante zu erkennende Lücke 38 zwischen zwei Objekten 18a-b ab. Dabei wandert mit der Förderbewegung zunächst der eine Lichtfleck 20a und dann der andere Lichtfleck 20b in die Lücke 38. Dies schlägt sich sowohl in einer Veränderung der Lichtintensität als auch des Objektabstands nieder.

Der zeitliche Verlauf der Empfangsintensität I₁ des ersten Lichtflecks 20a und der Empfangsintensität I₂ des zweiten Lichtflecks 20b ist in Figur 3a gezeigt. Bei der Lücke 38 entsteht mit zeitlichem Versatz ein Peak. Die Ausprägung dieses Peaks als Maximum statt als Minimum ist für die Erfindung belanglos und hängt von der Verschaltung ab. Figur 3a zeigt im unteren Teil weiterhin den zeitlichen Verlauf der Differenz I₁-I₂ der beiden Empfangsintensitäten in den Lichtflecken 20a-b. Die Auswertungseinheit 30 bestimmt den Nulldurchgang in der Differenzfunktion I₁-I₂ als den Schaltzeitpunkt. Ebenso denkbar ist eine kompliziertere Auswertung, die größere Zeitintervalle betrachtet, beispielsweise Korrelation mit einem erwarteten Verlauf oder dergleichen. Dabei kann eine Vorkenntnis der Objektform einfließen.

Ganz analog stellt Figur 3b den jeweiligen Abstandsverlauf d₁ beziehungsweise d₂ dar, der von der Auswertungseinheit 30 mittels Triangulation der Lichtflecken 20a-b erzeugt wird. Auch hier wird der Schaltzeitpunkt anhand des Nulldurchgangs der Differenz d₁-d₂ ermittelt. Der Kurvenverlauf der Abstände wird in der Praxis abweichend von den Darstellungen in Figur 3a-b nicht vollständig demjenigen der Empfangsintensitäten entsprechen. Diese Unterschiede wurden zur Erläuterung des Grundprinzips vernachlässigt. Deshalb werden in den weiteren Figuren auch jeweils die Empfangsintensitäten und die Abstände in demselben Diagramm gezeigt.

Durch Betrachtung der Differenz statt der Signale selbst werden langsame Änderungen im Remissionsverhalten, beispielsweise bei bunten Objekten oder einem Kontrastverlauf, oder im Abstandsverhalten kompensiert, wie sie beispielsweise bei einem schräg stehenden Objekt 18 auftreten. Effektiv entspricht dies einer optischen Hochpassfilterung in Verbindungsrichtung der beiden Sendelichtstrahlen 16a-b. Die Kantenerkennung wird dadurch wesentlich robuster.

Grundsätzlich detektiert der Sensor 10 die Lücke 38 alternativ entweder anhand der Empfangsintensitäten I oder anhand der Objektabstände d. Allerdings sind diese beiden Verfahren nicht in allen Situationen zuverlässig. Über die Empfangsintensität I wird letztlich die Remissionsänderung in der Lücke 38 erkannt, also anschaulich ein Farbwechsel. Der Objektabstand d erkennt dagegen die geometrische Lücke 38. Ein rein auf Empfangsintensität I basierender Sensor 10 verursacht möglicherweise Fehlschaltungen an schwarzen Strichen auf einer Objektoberfläche, während ein rein auf Objektabständen d basierender Sensor 10 möglicherweise fälschlich an Klebefalzen schaltet. Deshalb ist erfindungsgemäß bevorzugt, beide Erkennungsverfahren zu kombinieren und nur dann zu schalten, wenn sowohl anhand der Empfangsintensität I als auch anhand der Objektabstände d eine Lücke 38 detektiert wird.

Alternativ zu dem beschriebenen Sensor 10 ist auch denkbar, von der Triangulationstaster-Anordnung abzuweichen und rein energetisch, also nur auf Basis der Empfangsintensitäten zu arbeiten. Damit werden zweidimensionale Objektkanten, aber auch dreidimensionale Objektkanten anhand des veränderten Remissionsverhaltens in einer Objektlücke detektiert. Ebenso ist grundsätzlich vorstellbar, nur eine Lichtquelle vorzusehen und stattdessen Lichtflecken zu verschiedenen Zeitpunkten auszuwerten. Dies setzt aber zumindest einigermaßen statische Randbedingungen voraus und ist deshalb weniger robust.

Die aufgezeichneten Zeitverläufe, wie sie in Figur 3a-b beispielhaft gezeigt sind, erlauben sehr einfach die Geschwindigkeit der Relativbewegung zwischen Objekt 18 und Sensor 10 zu bestimmen. Für die Bewegungsrichtung muss nur festgestellt werden, welcher Lichtfleck 20a-b zuerst einen Peak verursacht. Die Geschwindigkeit berechnet sich aus der bekannten Geometrie der Lichtquellen, je nach verwendeter Sendeoptik 14 nach Einlernen oder Parametrieren eines typischen Objektabstands aus dem zeitlichen Abstand der beiden Peaks. Solche Signale, die eine Bewegung, eine Bewegungsrichtung oder eine Geschwindigkeit anzeigen, kann der Sensor 10 an eine übergeordnete Steuerung ausgeben oder selbst mit Referenzwerten vergleichen, um mögliche Fehler des Förderbandes 34 zu erkennen oder dessen Geschwindigkeit anzupassen und so den Durchsatz an Objekten 18 zu optimieren.

Das Schaltsignal liegt, da der später auf die Lücke 38 auftreffende Lichtfleck 20b zunächst noch die Lücke 38 passieren muss, erst etwas verspätet vor. Dieser zeitliche Versatz ist aber bekannt, so dass eine übergeordnete Steuerung ihn kompensieren kann. Vorteilhafterweise gibt die Auswertungseinheit 30 selbst den zeitlichen Versatz zwischen Schaltsignal und Zeitpunkt, zu dem die Lücke 38 den Sensor 10 passiert, mit aus, oder sie versieht die Schalterereignisse mit einem Zeitstempel.

Figur 4 zeigt in einer Draufsicht auf nur einige Elemente des Sensors 10 eine weitere Ausführungsform der Erfindung mit einer einteiligen telezentrischen Sendeoptik 14. Durch Verwendung einer einzigen Sendepupille wird der Lichtsender kostengünstiger. Die Sendeoptik 14 ist hier beispielhaft aus zwei Linsen 14a-b aufgebaut, um eine telezentrische optische Anordnung zu realisieren. Dadurch treffen die Mittelpunktstrahlen senkrecht auf dem Objekt 18 auf, und der Abstand der Lichtflecken 20a-b zueinander wird unabhängig vom Abstand zwischen Objekt 18 und Sensor 10. Alternativ zu einer telezentrischen Sendeoptik 14 kann aber die Lage der Lichtflecken 20a-b auf dem Lichtempfänger 26 auch anfänglich eingelernt werden, oder die Lichtsender sind einstellbar ausgebildet, so dass der Abstand der Lichtflecken 20a-b jeweils auf den Objektabstand und die zu detektierende Kante optimierbar ist.

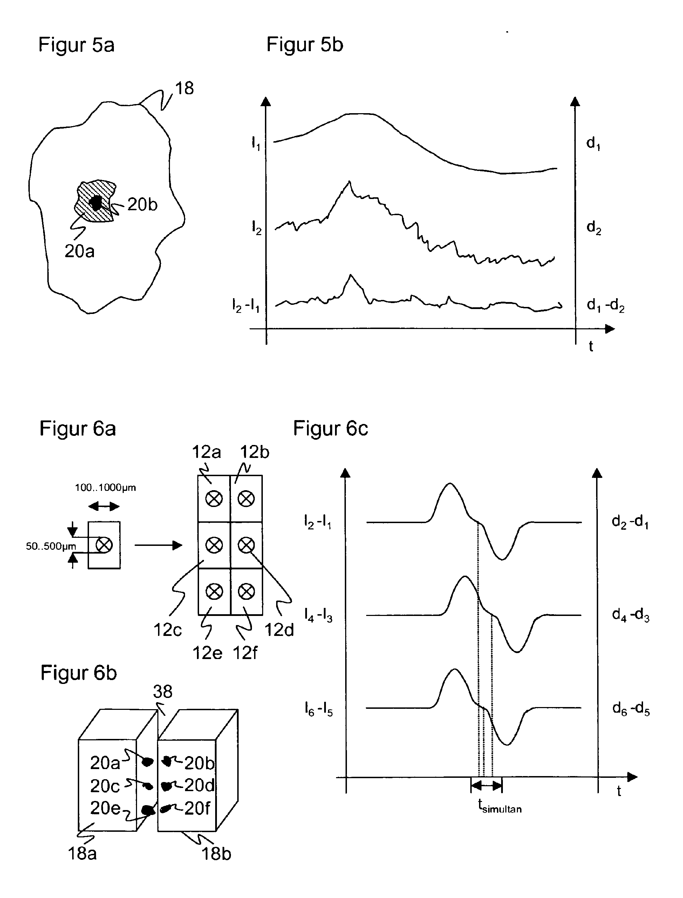

Figur 5a illustriert eine weitere Ausführungsform der Erfindung in einer Frontalansicht auf ein Objekt 18 mit einem größeren Lichtfleck 20a und einem kleineren Lichtfleck 20b. Unterschiedliche Lichtfleckgrößen lassen sich durch Maßnahmen wie eine unterschiedliche Abstrahlfläche, unterschiedliches Einwirken der Sendeoptik 14 auf verschiedene Lichtquellen 12a-b etwa mit anderer Brennweite oder eine Variation im Abstand zwischen Lichtquelle 12a-b und Sendeoptik 14 erreichen.

Bei dieser Ausführungsform mittelt der größere Lichtfleck 20a eine Umgebung des lokal abtastenden kleineren Lichtflecks 20b. Dies ist in Figur 5b weiter erläutert. Die Intensität I₁ und der Objektabstand d₁ wird durch den größeren Lichtfleck 20a über einen größeren Bereich gemittelt und verläuft daher mit sehr viel langsameren Änderungen als die Intensität I₂ und der Objektabstand d₂ des kleineren Lichtflecks 20b, bei dem sich schnelle lokale Änderungen mit den langsameren Änderungen überlagern. Langsame Änderungen können beispielsweise von einem Farbverlauf oder einer schräg zu dem Sensor 10 stehenden Oberfläche des Objekts 18 verursacht sein und sind für die Kantendetektion als Störsignal aufzufassen. Die jeweilige Differenz der beiden Empfangsintensitäten I₂-I₁ oder Objektabstände d₂-d₁ ist ein räumlich gemitteltes Hochpasssignal relativ zu einer Umgebung und kompensiert diese Störung, beispielsweise Remissionsunterschiede aufgrund einer Abstandsänderung. Wie in allen Figuren ist der Verlauf der Empfangsintensitäten I und der Objektabstände d rein beispielhaft zu verstehen. In der Praxis werden häufig Objekte mit regelmäßiger Geometrie detektiert, bei denen der Objektabstand d wesentlich langsamer variiert als die Empfangsintensität I bei einem bunt bedruckten Objekt.

Figur 6a erläutert eine weitere Ausführungsform der Erfindung mit einer Matrixanordnung von Lichtsendern 12a-f, die zu einem LED-Array zusammengefasst sind. Figur 6b zeigt eine beispielhafte Anordnung der von diesen Lichtsendern 12a-f an einer Lücke 38 zwischen Objekten 18 erzeugten Lichttlecken 20a-f. Die Lichtsender 12a-f sind in einem Waferverbund mit minimalem Abstand (pitch) von beispielsweise 200 µm zusammengefasst. Dadurch sind Lichtflecken 20a-f sehr nahe beieinander erzeugbar, so dass bei Auswertung der Differenzen von Empfangsintensität I oder Objektabstand d entsprechend steile Kanten detektiert werden.

Die Lichttlecken 20a-f werden jeweils paarweise parallel ausgewertet, so dass letztlich eine Auswertung längs der Kante stattfindet. Figur 6c zeigt beispielhafte Signaldifferenzen I₂ᵢ-I₂ᵢ₋₁ beziehungsweise d₂ᵢ-d₂ᵢ₋₁. Die Auswertungseinheit 20 bestimmt für jedes derart betrachtete Paar Lichtflecken 20a-b, 20c-d, 20e-f den Nulldurchgang des Differenzsignals und damit den Schaltzeitpunkt. Eine Kante oder Lücke 38 gilt dann als erkannt, wenn alle Paare von Lichtflecken 20a-b, 20c-d, 20e-f innerhalb eines Toleranzzeitintervalls tₛᵢₘᵤₗₜₐₙ gleichzeitig einen Schaltzeitpunkt erkennen. Selbstverständlich sind andere logische Verknüpfungen der Einzelentscheidungen denkbar, dabei genügt beispielsweise eine Mehrheitsentscheidung oder bereits eine einzige Einzelentscheidung, oder ganz allgemein wird eine Filterung angewandt.

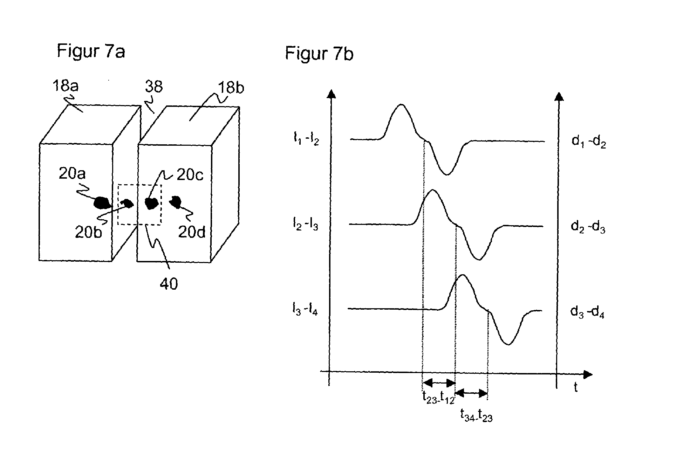

Statt einer gleichsam parallelen Abtastung der Lücke 38 wie in Figur 6 ist auch eine serielle Abtastung denkbar, die nun anhand der Figur 7 erläutert wird. Figur 7a zeigt eine Anordnung von vier Lichtflecken 20a-d in einer Linie quer zu der Lücke 38. Dabei werden jeweils benachbarte Lichtflecken 20a-b, 20b-c, 20c-d zur Differenzbildung zusammengefasst, wie durch das Rechteck 40 angedeutet.

Dabei entstehen zeitlich gegeneinander versetzte Signalverläufe der Differenzen Iᵢ-Iᵢ₊₁ beziehungsweise dᵢ-dᵢ₊₁, wobei der zeitliche Versatz mit der Geschwindigkeit der Relativbewegung zwischen Sensor 10 und Objekten 18 korrespondiert. Die Auswertungseinheit erwartet beispielsweise bei konstanter Fördergeschwindigkeit des Bandes 34, dass der zeitliche Versatz t₂₃-t₁₂ zwischen erstem Paar Lichtflecken 20a-b und zweitem Paar Lichtflecken 20b-c innerhalb von Toleranzen gleich dem zeitlichen Versatz t₃₄-t₂₃ zwischen zweitem Paar Lichtflecken 20b-c und drittem Paar Lichtflecken 20c-d ist. Auch hier ist allgemein der Einsatz eines Filters, beispielsweise eines Medianfilters, denkbar, um die Einzelentscheidungen zu einem Schaltsignal zusammenzufassen.

Um weniger Sendeenergie aufzuwenden und damit insbesondere die Wärmeentwicklung im Sensor 10 zu begrenzen, können die Lichtsender 12a-d auch zeitsequentiell adaptiv angesteuert werden. Dabei wird jeweils nur diejenige Lichtquelle 12a-d oder dasjenige Paar Lichtquellen 12a-d aktiviert, an dem sich die Lücke 38 erwartungsgemäß befindet. Die Erwartungshaltung wird dabei beispielsweise von einer bekannten oder gemessenen Fördergeschwindigkeit und Geometrie der Objekte 18 sowie der Detektionsergebnisse früher aktivierter Lichtquellen 12a-d bestimmt. Neben dem geringeren Energieaufwand wird damit auch die Messung robuster, da sich Lichtsender weniger gegenseitig stören.

Obwohl die Erfindung nacheinander anhand von Figuren dort dargestellten Ausführungsformen beschrieben ist, sind dennoch auch Mischformen umfasst. Beispielsweise sind eine Anordnung an einem Förderband, eine telezentrische Sendeoptik, unterschiedliche Matrixanordnungen der Lichtsender oder unterschiedliche Lichtfleckgröβen, die Ausgabe von Bewegungsrichtung und Geschwindigkeit, eines zeitlichen Versatzes oder eines Zeitstempels auch anders miteinander kombinierbar als dargestellt.

## Patentansprüche

1. Optoelektronischer Sensor (10) zur Detektion von als Kante (38) zu erkennenden Lücken zwischen zwei Objekten (18a-b) mit mindestens zwei Lichtsendern (12, 14), die eine Lichtquelle (12) und eine Sendeoptik (14) zur Erzeugung kollimierter Sendelichtstrahlen (16) aufweisen, mit einem ortsauflösenden Lichtempfänger (26) zur Aufnahme von durch die Sendelichtstrahlen (16) auf den Objekten (18) erzeugten Lichtflecken (20) sowie mit einer Auswertungseinheit (30), die dafür ausgebildet ist, bei Erkennung einer Kante (38) aus einer Empfangsintensität (I) der Lichtflecken (20) und/oder aus einem mittels Triangulation aus der Lage der Lichtflecken (28) auf dem Lichtempfänger (26) bestimmten Objektabstand (d) ein Objektfeststellungssignal auszugeben, wobei die Auswertungseinheit (30) dafür ausgebildet ist, jeweils die Differenz der aus zwei Lichtflecken (20) bestimmten Empfangsintensität (I) und/oder des aus zwei Lichtflecken (20) bestimmten Objektabstands (d) zu bewerten, um eine Kante (38) zu erkennen.

2. Sensor (10) nach Anspruch 1, der an einem Überwachungsbereich angeordnet ist, in dem sich Objekte (18) und Sensor (10) in einer Relativbewegung zueinander befinden, insbesondere an einem Förderband (34) oder einer Förderstrecke (34).

3. Sensor (10) nach Anspruch 1 oder 2, wobei die Lichtsender (12) jeweils den gleichen Basisabstand zu dem Lichtempfänger (26) aufweisen.

4. Sensor (10) nach einem der vorhergehenden Ansprüche, wobei die Lichtsender (12) mindestens eine gemeinsame Linse (14) insbesondere in telezentrischer Anordnung aufweisen.

5. Sensor (10) nach einem der vorhergehenden Ansprüche, wobei die Lichtsender (12, 14) dafür ausgebildet sind, bei gleichem Objektabstand unterschiedliche Lichtfleckgrößen (20) zu erzeugen.

6. Sensor (10) nach einem der vorhergehenden Ansprüche, wobei der Abstand der von verschiedenen Lichtsendern (12, 14) erzeugten Lichtflecken (20) zueinander einstellbar ist.

7. Sensor (10) nach einem der vorhergehenden Ansprüche, wobei eine Vielzahl von Lichtsendern (12) in einer Matrixanordnung oder in einer Linienanordnung vorgesehen sind.

8. Sensor (10) nach einem der vorhergehenden Ansprüche, wobei die Lichtsender (12, 14) längs einer zu erwartenden Kantenausrichtung (38) angeordnet sind und wobei die Auswertungseinheit (30) dafür ausgebildet ist, eine Kante (38) nur dann zu erkennen, wenn anhand aller oder zumindest mehrerer Lichtflecken (20) längs der Kante (38) innerhalb einer zeitlichen Toleranz simultan eine Kante (38) erkannt wird.

9. Sensor (10) nach einem der Ansprüche 1 bis 7, wobei die Lichtsender (12, 14) quer zu einer zu erwartenden Kantenausrichtung angeordnet sind und wobei jeweils ein Paar Lichtsender (12) in einem erwarteten Zeitverlauf einer Relativbewegung zwischen Objekten (18) und Sensor (10) aktivierbar ist.

10. Sensor (10) nach einem der vorhergehenden Ansprüche, wobei die Auswertungseinheit (30) dafür ausgebildet ist, eine Geschwindigkeit einer Relativbewegung zwischen Objekt (18) und Sensor (10) zu erkennen und insbesondere mit einer Referenzgeschwindigkeit zu vergleichen.

11. Sensor (10) nach einem der vorhergehenden Ansprüche, wobei die Auswertungseinheit (30) dafür ausgebildet ist, das Objektfeststellungssignal mit einem Versatz oder einem Zeitstempel auszugeben.

12. Verfahren zur Detektion von als Kante (38) zu erkennenden Lücken zwischen zwei relativ zu einem Sensor (10) bewegten Objekten (18a-b) in einem Überwachungsbereich, insbesondere auf einem Förderband (34) geförderten Objekten (18), bei dem mindestens zwei kollimierte Sendestrahlen (16) auf die Objekte (18) gerichtet und als Lichtflecken (20, 28) in einem ortsauflösenden Lichtempfänger (26) empfangen werden, wobei bei Erkennung einer Kante (38) aus einer Empfangsintensität (I) der Lichtflecken (20) und/oder aus einem mittels Triangulation aus der Lage der Lichtflecken (28) auf dem Lichtempfänger (26) bestimmten Objektabstand (d) ein Objektfeststellungssignal ausgegeben wird, wobei
ein Nulldurchgang in der Differenz der Empfangsintensität (I) der Lichtflecken (20) und/oder in der Differenz von mittels Triangulation aus der Lage der Lichtflecken (28) auf dem Lichtempfänger (26) bestimmten Objektabständen (d) ermittelt wird, um eine Kante (26) zu erkennen.

13. Verfahren nach Anspruch 12, wobei die Lichtsender (12,1 4) längs einer zu erwartenden Kantenausrichtung (38) angeordnet werden und eine Kante (38) nur dann erkannt wird, wenn anhand aller oder zumindest mehrerer Lichtflecken (20) längs der Kante (38) innerhalb einer zeitlichen Toleranz simultan eine Kante (38) erkannt wird.

14. Verfahren nach Anspruch 12, wobei die Lichtsender (12, 14) quer zu einer zu erwartenden Kantenausrichtung (38) angeordnet sind und wobei jeweils nur ein Paar Lichtsender (12) in einem erwarteten Zeitverlauf der Relativbewegung zwischen Objekten (18) und Sensor (10) aktiviert werden.

15. Verfahren nach einem der Ansprüche 12 bis 14, wobei eine Geschwindigkeit der Relativbewegung zwischen Objekt (18) und Sensor (10) erkannt und ausgegeben oder mit einer Referenzgeschwindigkeit verglichen wird, und/oder wobei das Objektfeststellungssignal mit einem Versatz oder einem Zeitstempel ausgegeben wird.

## Claims

1. Optoelectronic sensor (10) for the detection of gaps between two objects (18a-b) to be detected as an edge (38), with at least two light transmitters (12, 14) comprising a light source (12) and an optical transmission unit (14) for generating collimated transmission light beams (16), with a spatially resolving light receiver (26) for the capturing of light spots (20) generated on the objects (18) by the transmission light beams (16), and with an evaluation unit (30) configured to upon detection of an edge (38) output an object detection signal from a received intensity (I) of the light spots (20) and/or from an object distance (d) determined from the position of the light spots (20) on the light receiver (26) by triangulation,
wherein the evaluation unit (30) is configured to evaluate the difference of the received intensity (I) determined from two light spots (20) and/or of the object distance (d) determined from two light spots (20), respectively, in order to detect an edge (38).

2. The sensor (10) according to claim 1,
that is arranged at a monitored area in which objects (18) and sensor (10) are in a relative motion to each other, in particular at a conveyor belt (34) or a conveyor line (34).

3. The sensor (10) according to claim 1 or 2,
wherein the light transmitters (12) each comprise the same basic distance to the light receiver (26).

4. The sensor (10) according to any of the preceding claims,
wherein the light transmitters (12) comprise at least one common lense (14), in particular in a telecentric arrangement.

5. The sensor (10) according to any of the preceding claims,
wherein the light transmitters (12, 14) are made to generate different light spot (20) sizes at the same object distance.

6. The sensor (10) according to any of the preceding claims,
wherein the mutual distance of the light spots (20) generated by the different light transmitters (12, 14) is adjustable.

7. The sensor (10) according to any of the preceding claims,
wherein a plurality of light transmitters (12) are provided in a matrix arrangement or a linear arrangement.

8. The sensor (10) according to any of the preceding claims,
wherein the light transmitters (12, 14) are arranged along an expected edge (38) orientation and wherein the evaluation unit (30) is configured to detect an edge (38) only if an edge (38) is simultaneously detected within a temporal tolerance from all or at least several light spots (20) along the edge (38).

9. The sensor (10) according to any of claims 1 to 7,
wherein the light transmitters (12, 14) are arranged transversal to an expected edge orientation and wherein a respective pair of light transmitters (12) can be activated in an expected temporal course of a relative motion between objects (18) and sensor (10).

10. The sensor (10) according to any of the preceding claims,
wherein the evaluation unit (30) is configured to detect the velocity of a relative motion between objects (18) and sensor (10) and in particular compare with a reference velocity.

11. The sensor (10) according to any of the preceding claims,
wherein the evaluation unit (30) is configured to output the object detection signal with an offset or a time stamp.

12. Method for the detection of gaps between two objects (18a-b) to be detected as an edge (38) in a monitored area, the objects (18) being moved relative to a sensor (10), in particular are conveyed on a conveyor belt (34), wherein at least two collimated transmission beams (16) are directed at the objects (18) and are received as light spots (20, 28) in a spatially resolving light receiver (26), wherein upon detection of an edge (38) an object detection signal is output from a received intensity (I) of the light spots (20) and/or from an object distance (d) determined from the position of the light spots (20) on the light receiver (26) by triangulation,
wherein a zero crossing of the difference of the received intensity (I) of the light spots (20) and/or of the difference of the object distances determined from the position of the light spots (20) on the light receiver (26) is determined in order to detect an edge (38).

13. The method according to claim 12,
wherein the light transmitters (12, 14) are arranged along an expected egde orientation and an edge (38) is detected only if an edge (38) is simultaneously detected within a temporal tolerance from all or at least several light spots (20) along the edge (38).

14. The method according to claim 12,
wherein the light transmitters (12, 14) are arranged transversal to an expected edge orientation and wherein only one respective pair of light transmitters (12) is activated in an expected temporal course of the relative motion between objects (18) and sensor (10).

15. The method according to any of claims 12 to 14,
wherein the speed of a relative motion between objects (18) and sensor (10) is detected and output or compared with a reference speed, and/or wherein the object detection signal is output with an offset or a time stamp.

## Revendications

1. Capteur optoélectronique (10) pour la détection d'intervalles, qu'il s'agit de reconnaître comme des bords (38), entre deux objets (18a-b), comprenant au moins deux émetteurs de lumière (12, 14), qui comprennent une source de lumière (12) et une unité optique d'émission (14) pour engendrer des rayons lumineux émis collimatés (16), comprenant un récepteur de lumière (26) à résolution locale pour l'enregistrement de taches lumineuses (20) engendrées sur les objets (18) par les rayons lumineux émis (16), et comprenant une unité d'évaluation (30) qui est réalisée, lors de la reconnaissance d'un bord (38) à partir d'une intensité de réception (I) des taches lumineuses (20) et/ou à partir d'une distance objet (d) déterminée par triangulation à partir de la position des taches lumineuses (28) sur le récepteur de lumière (26), pour délivrer un signal de constatation d'objet, dans lequel
l'unité d'évaluation (30) est réalisée pour évaluer respectivement la différence des intensités de réception (I) déterminées à partir de deux taches lumineuses (20) et/ou des distances objet (d) déterminées à partir de deux taches lumineuses (20), pour reconnaître un bord (38).

2. Capteur (10) selon la revendication 1, agencé au niveau d'une zone de surveillance dans laquelle des objets (18) et le capteur (10) se trouvent dans un mouvement relatif les uns par rapport aux autres, en particulier au niveau d'une bande de convoyage (34) ou d'un trajet de convoyage (34).

3. Capteur (10) selon la revendication 1 ou 2,
dans lequel les émetteurs de lumière (12) présentent à chaque fois la même distance de base par rapport au récepteur de lumière (26).

4. Capteur (10) selon l'une des revendications précédentes,
dans lequel les émetteurs de lumière (12) comprennent au moins une lentille commune (14), en particulier dans un agencement télécentrique.

5. Capteur (10) selon l'une des revendications précédentes,
dans lequel les émetteurs de lumière (12, 14) sont réalisés pour engendrer des taches lumineuses (20) de tailles différentes pour la même distance objet.

6. Capteur (10) selon l'une des revendications précédentes,
dans lequel la distance des taches lumineuses (20) engendrées par différents émetteurs de lumière (12, 14) sont réglables les unes par rapport aux autres.

7. Capteur (10) selon l'une des revendications précédentes,
dans lequel il est prévu une pluralité d'émetteurs de lumière (12) dans un agencement matriciel ou dans un agencement linéaire.

8. Capteur (10) selon l'une des revendications précédentes,
dans lequel les émetteurs de lumière (12, 14) sont agencés le long d'une direction (38) attendue pour des bords, et dans lequel l'unité d'évaluation (30) est réalisée pour reconnaître un bord (38) uniquement lorsqu'elle reconnaît simultanément un bord (38) au moyen de toutes les taches lumineuses (20) ou d'au moins plusieurs taches lumineuses (20) le long du bord (38), à l'intérieur d'une tolérance temporelle.

9. Capteur (10) selon l'une des revendications 1 à 7,
dans lequel les émetteurs de lumière (12, 14) sont agencés perpendiculairement à une direction attendue pour des bords, et dans lequel une paire d'émetteurs de lumière (12) sont susceptibles d'être activés dans un déroulement temporel attendu d'un mouvement relatif entre des objets (18) et le capteur (10).

10. Capteur (10) selon l'une des revendications précédentes,
dans lequel l'unité d'évaluation (30) est réalisée pour reconnaître une vitesse d'un mouvement relatif entre un objet (18) et le capteur (10), et en particulier pour la comparer avec une vitesse de référence.

11. Capteur (10) selon l'une des revendications précédentes,
dans lequel l'unité d'évaluation (30) est réalisée pour délivrer le signal de constatation d'objet avec un décalage ou avec une marque temporelle.

12. Procédé pour la détection d'intervalles, qu'il s'agit de reconnaître comme des bords (38), entre deux objets (18a-b) en déplacement par rapport à un capteur (10), dans une zone de surveillance, en particulier des objets (18) convoyés sur une bande de convoyage (34), dans lequel au moins deux rayons lumineux collimatés (16) sont dirigés vers les objets (18) et sont reçus sous forme de taches lumineuses (20, 28) dans un récepteur de lumière (26) à résolution locale, dans lequel lors de la reconnaissance d'un bord (38) à partir d'une intensité de réception (I) des taches lumineuses (20) et/ou à partir d'une distance objet (d) déterminée par triangulation à partir de la position des taches lumineuses (28) sur le récepteur de lumière (26), un signal de constatation d'objet est délivré, dans lequel
on détermine un passage à zéro dans la différence des intensités de réception (I) des taches lumineuses (20) et/ou dans la différence des distances objet (d) déterminées par triangulation à partir de la position des taches lumineuses (28) sur le récepteur de lumière (26) pour reconnaître un bord (26).

13. Procédé selon la revendication 12,
dans lequel les émetteurs de lumière (12, 14) sont agencés le long d'une direction (38) attendue pour des bords, et dans lequel l'unité d'évaluation (30) est réalisée pour reconnaître un bord (38) uniquement lorsqu'elle reconnaît simultanément un bord (38) au moyen de toutes les taches lumineuses (20) ou d'au moins plusieurs taches lumineuses (20) le long du bord (38), à l'intérieur d'une tolérance temporelle.

14. Procédé selon la revendication 12,
dans lequel les émetteurs de lumière (12, 14) sont agencés perpendiculairement à une direction attendue pour des bords, et dans lequel une paire d'émetteurs de lumière (12) sont activés dans un déroulement temporel attendu d'un mouvement relatif entre des objets (18) et le capteur (10).

15. Procédé selon l'une des revendications 12 à 14,
dans lequel une vitesse du mouvement relatif entre l'objet (18) et le capteur (10) est reconnue et délivrée, ou bien comparée avec une vitesse de référence, et/ou dans lequel le signal de constatation d'objet est délivré avec un décalage ou avec une marque temporelle.
